(19) Europäisches Patentamt / European Patent Office / Office européen des brevets

(11) **EP 4 574 777 B1**

(12) **EUROPEAN PATENT SPECIFICATION**

(45) Date of publication and mention
of the grant of the patent:
**05.11.2025 Bulletin 2025/45**

(21) Application number: **23218126.3**

(22) Date of filing: **19.12.2023**

(51) International Patent Classification (IPC):
**C03B 5/027** (2006.01)

(52) Cooperative Patent Classification (CPC):
**C03B 5/027**

(54) **GLASS MELTING FURNACE WITH ELECTRICAL HEATING AND METHOD FOR HEATING A GLASS MELT**

GLASSCHMELZOFEN MIT ELEKTRISCHER BEHEIZUNG UND VERFAHREN ZUM ERHITZEN EINER GLASSCHMELZE

FOUR DE FUSION DE VERRE À CHAUFFAGE ÉLECTRIQUE ET PROCÉDÉ DE CHAUFFAGE D'UNE FUSION DE VERRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietor: **SCHOTT AG**
**55122 Mainz (DE)**

(72) Inventors:
- **Ohmstede, Volker**
  **55122 Mainz (DE)**
- **Eichholz, Rainer Erwin**
  **95666 Mitterteich (DE)**
- **Schmidbauer, Wolfgang**
  **55122 Mainz (DE)**
- **Strobel, Alexander Uwe**
  **95666 Mitterteich (DE)**
- **Wolf, Sebastian**
  **55122 Mainz (DE)**

- **Weidmann, Günter**
  **55122 Mainz (DE)**
- **Druschke, Frank Jürgen**
  **55122 Mainz (DE)**
- **Rösel, Gregor**
  **55122 Mainz (DE)**
- **Knoche, Stefan**
  **55122 Mainz (DE)**
- **Bauer, Stefan**
  **55122 Mainz (DE)**

(74) Representative: **Fuchs Patentanwälte Partnerschaft mbB**
**Tower 185**
**Friedrich-Ebert-Anlage 35-37**
**60327 Frankfurt am Main (DE)**

(56) References cited:
**EP-A1- 4 342 856        CN-U- 208 545 291**
**US-A1- 2006 144 089     US-A1- 2017 305 775**

EP 4 574 777 B1

**Description**

The present disclosure relates to a glass melting furnace with an electrical heating comprising electrodes held by an electrode holder and a method for heating a glass melt. The electrodes are to be used at current frequencies of 300 Hz and above.

Background

The glassmaker has a number of options for heating a glass melt, e.g. gas burners, electric resistance heating, or inductive heating. As of today, gas is the predominant heat source used in glass melting.

The production of glass has a quite high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, water power, or solar panels. The same power sources may also be used to produce hydrogen by electrolysis which then can be used to feed the gas burners. While the latter requires less changes to an existing glass production facility with a gas burner heating, the intermediate step of electrolysis is of course associated with a considerable energy loss. Hence, a direct use of the electrical power is more desirable.

There are different kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes, and other construction glass products (e.g., glass wool used for insulation) are of the former type. One reason is that the glass used for these products has rather low melting temperatures and a steep viscosity-temperature curve; in addition, quality criteria of the manufactured products are not very stringent. For example, drinking glasses and construction glass products may contain an occasional bubble, and variations in shape and dimension are tolerable. These glass products may contain impurities to a certain extent without a problem because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Of course, the amount of energy needed for making 200 tons of low melting glass is significantly lower than for a higher melting glass.

The quality required for a given product depends on its intended use. Some high-quality glasses are used to make products that do not entertain the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this invention to provide glass products that meet high quality criteria.

While the use of an electric resistance heating for producing such high-quality glass products would be favorable, it faces several difficulties which until the present day have impeded a more widespread application.

One of these difficulties is the corrosion of the electrodes. When operated at the standard line frequency of 50 Hz, a considerable amount of the metal of the electrodes dissolves into the glass melt and/or bubbles may form on the electrode surfaces. While increasing the current frequency may be desirable to reduce this electro corrosion effect, the higher current frequencies will cause high electric losses during operation, for example, due to less effective power supply. These problems with dissolved electrode material and bubbles are particularly pronounced with glass melts having a high electric conductivity because the high electric conductivity requires high current densities for generating enough heat within the glass melt to keep it in the liquid state. The high current density in turn increases the electro corrosion effect on the electrodes and the material loss. This material loss of the electrodes is critical particularly for two reasons.

The first reason is obviously the requirement to replace the electrodes at certain intervals. This not only increases the operation costs for the facility but also has an impact on the carbon footprint since for the production of the electrodes a considerable amount of energy is required. Depending on the type of metal used, very high temperatures for melting have to be achieved and the further shaping and handling steps again consume energy. Hence, a frequent exchange of the electrodes significantly increases the carbon footprint of the glass production method. In addition to this, the glass production process has to be stopped for maintenance because it is not possible to simply pull single electrodes out of the melting tank for replacement while the facility continues operation. Hence, when restarting the facility after a replacement of the electrodes, either the whole melting tank filled with the solidified glass melt will have to be heated by burners for re-melting in order to be able to lower the new electrodes into the melt or the glass melt will have to be completely drained from the melting tank before shutting down the process and the process will have to start from scratch by melting new raw materials - again with burners - to prepare a new melt. The amount of energy and the respective carbon footprint required for this shutdown and restarting procedure are even higher than for the production of the electrodes. Of course, the impact on the productivity of the facility is also quite tremendous since it takes days to weeks to reach stable production conditions again which are required for a constant quality glass product.

The second reason is the just mentioned glass quality. The dissolved metal of the electrodes may cause severe discolorations of the glass melt in different colors depending on the type of metal and glass composition used. Furthermore, metallic particles which have been eroded from the electrodes may impede the production, in particular of thin or ultra-thin glasses due to intolerable thickness variations or may generally be prohibited by the specification of a certain particle level, for example for optical or mechanical reasons. Moreover, also the above-mentioned formation of bubbles may be detrimental to the glass quality because depending on the position of the formation of them it may be impossible to avoid them ending in the final glass product. While these defects may be tolerable to a certain extent for cheaper glass products which are dark colored anyway or do not need to meet defined mechanical or optical standards, it is already intolerable for cheaper glass products which are to be completely colorless, have a certain defined color or should not have visible flaws. For high-quality expensive glass products, such a discoloration, particle load, or bubble load is an absolute show-stopper which has to be avoided by all means.

Hence, it is another object of the present invention to provide a production method for high quality glass products which has a low carbon footprint over the entire process. Further, this process should in particular work for glass types having a good electric conductivity.

Document EP 4 342 856 A1 discloses a method and an apparatus for making a glass product and a corresponding glass product. The method comprises electric heating of the raw materials and/or the glass melt at current frequencies between 1 kHz and 5 kHz and is characterized by a low carbon footprint. The apparatus may comprise coaxial shielding means on the connectors between the electrodes and the frequency changer and/or the supporting structure of the melter may comprise non-ferromagnetic materials. Low corrosion of the electrodes and a low amount of bubbles in the glass are achieved.

Document US 2006/144089 A1 discloses a method and an apparatus for heating a melt in a melting vessel with cooled walls. The melt is heated conductively by current flowing between at least two cooled electrodes, which each replace part of the wall of the melting vessel.

Document US 2017/305775 A1 discloses an apparatus and a method for producing glass products from a glass melt, avoiding bubble formation, wherein the apparatus includes a crucible and an internally component for processing the glass melt, and wherein, for heating the glass melt, the apparatus comprises an AC generator which energizes the crucible or stirring crucible via electrical connection elements. The component or stirring system is connected via a current-limiting choke having a variable impedance with the power supply elements. The impedance of the current-limiting choke is adjusted so that an AC density existing in the glass melt lies between a lower limit value and an upper limit value. By means of a choke and by adjusting the impedance it can be achieved that the AC load of the system can be minimized and that simultaneously the water decomposition reaction at the precious metal surfaces can positively be influenced.

Document CN 208 545 291 U discloses a glass kiln with an electrode heating method suitable for high-generation substrates and cover plates, comprising a furnace body and a glass melting pool arranged in the furnace body, a feeding port and a flue port are arranged on the front wall of the furnace body, a discharge port connected to a platinum channel is arranged on the rear wall of the furnace body, a large arch and a breast wall are arranged above the furnace body; tin oxide electrodes are arranged in the pool wall of the glass melting pool. The glass furnace realizes the melting of glass liquid by electrode heating, wherein the electrode is located below the glass liquid surface, the temperature inside the glass liquid is slightly higher than the temperature on the glass liquid surface, but no heat cycle is formed, and the heating requirement of high-quality TFT glass liquid is realized by adjusting the electrode heating temperature; the tin oxide electrode has no pollution to the glass liquid, and the length of the electrode in the melting furnace is kept stable by continuously advancing the tin oxide electrode, thereby ensuring that the quality of the molten glass remains stable.

Summary of the disclosure

In a first aspect according to claim 1, this disclosure relates to a glass melting furnace comprising a vessel for containing a glass melt, at least two electrode holders each holding an electrode, and a power source connected to the electrodes, wherein

- the power source is configured to provide an electric current having a current frequency of $\geq 300$ Hz, and
- the electrode holders are at least partially made of a material having a relative permeability $\mu_r \leq 100$.

In a second aspect as defined in claim 7, this disclosure relates to a method for electrically heating a glass melt in a glass melting furnace comprising at least two electrode holders each holding an electrode by supplying an electric current to the electrodes, wherein

- the electric current has a current frequency of $\geq$ 300 Hz, and
- the electrode holders are at least partially made of a material having a relative permeability $\mu_r \leq 100$.

Brief description of the drawings

**Figure 1a** shows the frequency dependency of the power loss through the electrode holders in relation to the standard line frequency of 50 Hz.

**Figure 1b** shows the $\mu_r$ dependency of the power loss through the electrode holders in relation to a relative permeability $\mu_r$ of 1,000.

**Figure 1c** shows the $\sigma$ dependency of the power loss through the electrode holders in relation to an electrical conductivity $\sigma$ of 5.9 MS/m.

**Figure 2** shows an electrode holder according to this disclosure with an electrode being held electrically isolated from the electrode holder.

**Figure 3** shows an electrode holder according to this disclosure with an electrode which is conductively connected to the electrode holder by means of a short circuit ring.

**Figure 4** shows an electrode holder according to this disclosure with a glazing collar.

Details of the disclosure

The details of this disclosure relate to the aspects described in the summary of the disclosure. Any of the features of the embodiments described hereinafter may relate to the glass melting furnace as well as the method for electrically heating a glass melt in a glass melting furnace.

A "glass melt" is a volume of a batch of glass raw materials that has a viscosity of less than $10^{7.6}$ dPas.

Such a viscosity can be measured using the fiber elongation method, e.g., as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g., as described in DIN ISO 7884-2:1998-2. The dependence of viscosity on temperature is determined according to the VFT equation (Vogel-Fulcher-Tammann). The VFT equation is shown below.

$$\lg(\eta/dPas)=A+\frac{B}{(t-t_0)}$$

In the VFT equation, t is the temperature under consideration. A, B and $t_0$ are the so-called VFT constants that are specific for each glass composition.

A "glass melting furnace" is a melting facility for melting glass. The glass melting furnace comprises a "melting tank" and further parts such as a refining tank or refining area. Some glass melting furnaces have a combined tank with different sections, one section for melting and one for refining, while others have separate tanks for this purpose. The glass melting furnace according to this disclosure relates to both alternatives of a combined tank including the refining section as well as the separate tanks. In particular, the term glass melting furnace is meant to cover all areas which are in contact with the glass melt.

A "melting tank" is a vessel used for melting glass. The vessel defines a volume that can contain a glass melt. The melting tank may have a substantially rectangular base or bottom plate. It may have walls to keep the melt within the tank. Typically, a melting tank will not be filled to the rim. A melting tank may have a superstructure above the glass melt surface ("covered melting tank"). The superstructure may be vaulted.

The "relative permeability $\mu_r$" is defined as the ratio of the permeability $\mu$ of a specific medium to the magnetic constant $\mu_0$:

$$\mu_r = \frac{\mu}{\mu_0}$$

The "magnetic constant $\mu_0$", also known as the "permeability constant" or the "permeability of free space", is a physical constant and is defined as $1.25663706212 \cdot 10^{-6}$ H/m. Consequently, the relative permeability $\mu_r$ of a vacuum has by definition the dimensionless value 1. Diamagnetic materials have a relative permeability of $0 \leq \mu_r < 1$ and paramagnetic materials of $\mu_r > 1$. Ferrimagnetic and ferromagnetic materials a relative permeability of $\mu_r \gg 1$. The relative permeability $\mu_r$ may be determined using a magnetometer system in accordance with IEC 60404-15:2012 + A1:2016 and ASTM A342M:2021.

The inventors have found that attempts to improve the carbon footprint and the corrosion problem of the electrodes simply by increasing the current frequency for their operation are limited by further difficulties. Higher current frequencies will cause high electric losses during operation in common glass melting furnaces. This energetic disadvantage is not only by itself detrimental to the carbon footprint but also creates a secondary disadvantage in view of the power loss. The power loss causes an increased heating of the electrodes and the electrode holders which in turn mandates an increased cooling of them. The increased cooling requirement again has a negative effect on the carbon footprint and poses a higher risk of damage to the facility in case of a malfunction of the cooling. Moreover, not all parts of the electrode holders are sufficiently close to the cooling conduits to avoid a temperature increase because in normal operation at standard line frequencies of 50/60 Hz there is no need for an excessive cooling of all parts and an over-cooling of the electrodes and electrode holders is strictly avoided in order to prevent a heat loss of the glass melt. This power loss and heating issue exists for electrode holders which are in conductive contact with the electrodes as well as for those which are not part of the current flow and isolated from the electrodes. The latter has been found to be caused by the electromagnetic field of the electrodes created by the higher current frequency.

Hence, one essential aspect in the development of a method and melting furnace for melting glass having a reduced carbon footprint has been found to be the reduction of the losses in the electrode holders. While the current-displacement effect and hysteretic loss are negligibly small when using the common 50/60 Hz standard line frequencies for operation of the electrodes, they become critical at considerably higher frequencies.

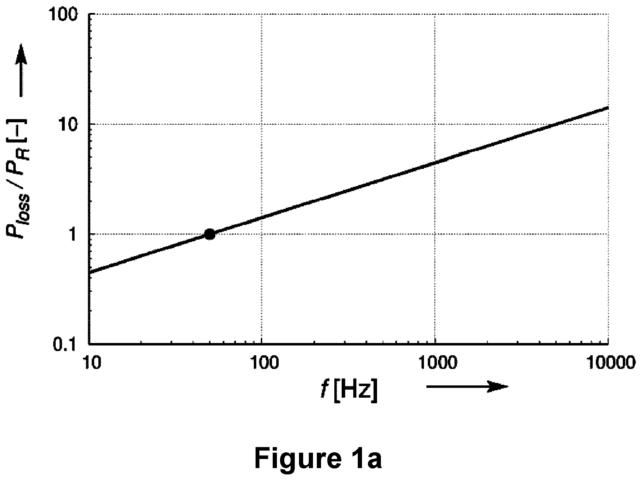

**Figure 1a** shows the power loss $P_{loss}$ through the electrode holders as a function of the frequency. In the graph, the power loss is shown normalized in relation to the power loss $P_R$ at a standard line frequency of 50 Hz. It is evident that an increase in frequency results in a drastic increase in the power loss. For example, when increasing the frequency from 50 Hz to 10,000 Hz the power loss will increase by about the 14-fold.

This power loss may be reduced by altering the material properties of the electrode holder material. To this end, two options may be considered. The first one being a change of the relative permeability $\mu_r$ and the second one a change of the electrical conductivity $\sigma$.

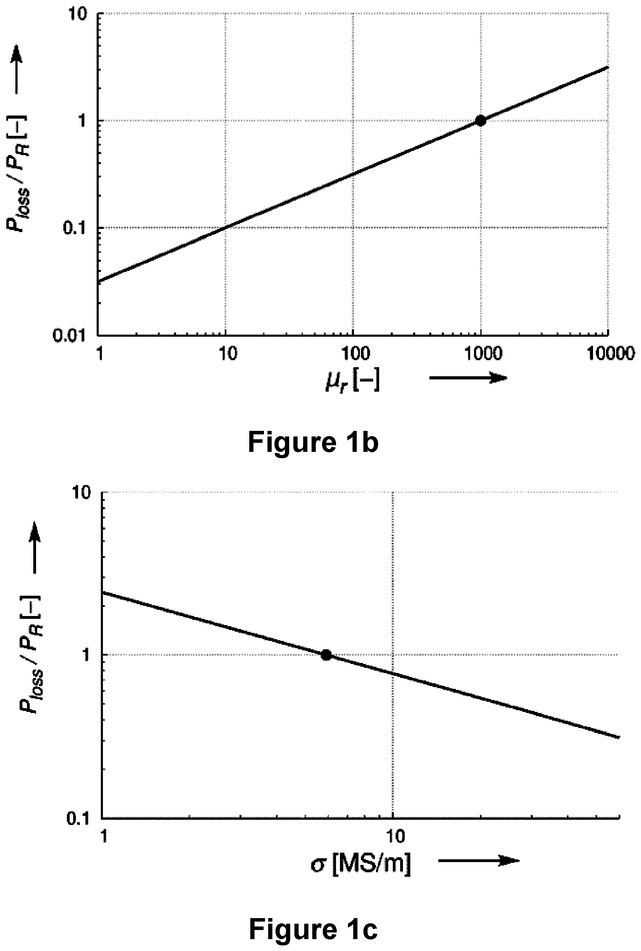

**Figure 1b** shows the relative permeability $\mu_r$ dependency of the power loss $P_{loss}$ through the electrode holders. In the graph, the power loss is shown normalized in relation to the power loss $P_R$ at a relative permeability $\mu_r$ of 1,000. Such a relative permeability corresponds to the relative permeability of magnetic construction steel type S235 JR which is commonly used for electrode holders and whose relative permeability $\mu_r$ typically is 1,000 but may also reach values of up to 8,000. As can be seen, the relative permeability $\mu_r$ plays an important role for the power loss. A reduction of the relative permeability $\mu_r$ from 1,000 to 1 will result in a reduction in power loss of about 30-fold. Selecting materials for the electrode holders which have a low relative permeability $\mu_r$ may, hence, be used to reduce the losses encountered when increasing the operation frequency of the electrodes. By selecting aluminum, copper, or austenitic steel which have a relative permeability $\mu_r$ of about 1, even an over-compensation of the losses may be achieved.

**Figure 1c** shows the electrical conductivity $\sigma$ dependency of the power loss $P_{loss}$ through the electrode holders. In the graph, the power loss is shown normalized in relation to the power loss $P_R$ at an electrical conductivity $\sigma$ of 5.9 MS/m. This electrical conductivity $\sigma$ of 5.9 MS/m again corresponds to the electrical conductivity $\sigma$ of magnetic construction steel type S235 JR. As can be seen, the electrical conductivity $\sigma$ of an electrode holder material will have a smaller effect on the power loss than the relative permeability $\mu_r$.

The above-mentioned aluminum, copper, and austenitic steel have respective electrical conductivities $\sigma$ of 38 MS/m, 58 MS/m, and 1.4 MS/m. This means that austenitic steel is in terms of its effect on power loss less favorable than the usual magnetic construction steel type S235 JR while aluminum and copper exceed its performance. However, in view of its far better mechanical and thermal properties austenitic steel may nevertheless be the preferred choice. If the reduction of the power loss is to be maximized, the materials with higher electrical conductivities can be chosen while keeping an eye on the constructional requirements.

Hence, in embodiments, the material of the electrode holders may have a relative permeability $\mu_r \leq 100$ or a relative permeability $\mu_r \leq 10$ or a relative permeability of $0.95 \leq \mu_r \leq 1.05$. They may have a relative permeability $\mu_r \leq 75$ or a relative permeability $\mu_r \leq 50$ or a relative permeability $\mu_r \leq 25$ or a relative permeability $\mu_r \leq 20$ or a relative permeability $\mu_r \leq 15$ or a relative permeability $\mu_r \leq 5$ or a relative permeability $\mu_r \leq 2.5$ or. They may have a relative permeability $0.955 \leq \mu_r \leq 1.045$ or a relative permeability $0.960 \leq \mu_r \leq 1.040$ or a relative permeability $0.965 \leq \mu_r \leq 1.035$ or a relative permeability

$0.970 \leq \mu_r \leq 1.030$ or a relative permeability $0.975 \leq \mu_r \leq 1.025$. These relative permeabilities will effectively reduce the current-displacement effect and hysteretic loss in the materials of the electrode holders when used with current frequencies above the standard line frequencies of 50/60 Hz, and particularly with a current frequency of $\geq 300$ Hz. The electrode holders may consist of or comprise the materials discussed herein.

In embodiments, the material of the electrode holders may be a metal.

In embodiments, the material of the electrode holders may be a diamagnetic or paramagnetic material.

Examples of diamagnetic materials which may be used are copper, gold, bismuth, and zinc, and examples of paramagnetic materials are aluminum, platinum, steel (e.g., austenitic steel) and combinations of two or more thereof.

In embodiments, the electrode holders may be mounted electrically isolated and/or with a material having a relative permeability $\mu_r \leq 100$ or a relative permeability $\mu_r \leq 10$ or a relative permeability of $0.95 \leq \mu_r \leq 1.05$. It may have a relative permeability $\mu_r \leq 50$ or a relative permeability $\mu_r \leq 25$ or a relative permeability $\mu_r \leq 5$. It may have a relative permeability $0.975 \leq \mu_r \leq 1.025$. To this end, the electrode holders can be fixed to the surrounding structure with an isolator material and/or the material of the surrounding structure has said relative permeability. While the first measure suppresses the direct flow of current, the second minimizes the current induced in the surrounding conductive structure. This has been found to be advantageous because it eliminates or minimizes the presence of further grounding points and earth currents. Particularly when combined, an optimized effect can be achieved.

In embodiments, the electrodes may be electrically isolated from the electrode holders or may be conductively connected to the electrode holders, optionally with a short circuit ring. Here, the term "short circuit ring" is to be understood broad as referring to a ring-shaped conductive member encircling the electrode and contacting it with the electrode holder wherein the ring-shape is not limited to circular or oval structures but can also comprise rectangular or square structures as may be required to abut to the cross-section of the electrode. Both variants may be advantageous in connection with the further design of the glass melting furnace and particularly the power supply to the electrodes. An electrically isolated fixing of the electrodes within the electrode holders helps to reduce the corrosion of the electrode holders since no electro corrosion will occur. If the electrodes are conductively connected to the electrode holders, the path of the current will particularly at higher frequencies lie on the outer surface of the electrode holder and the electrode beneath the connection point. The part of the electrode which is inside the electrode holder will, hence, not be prone to the electro corrosion and is easier to protect.

In embodiments, when held by the electrode holders, between the electrodes and the electrode holders a free space may be formed which is in fluid communication with an inlet for a gas. For example, a rod-shaped electrode may be positioned concentrically within a tubular electrode holder such that there is a gap between the outer surface of the electrode and the inner surface of the of the electrode holder. For protecting the electrode, a protective gas may be provided via the inlet. An outlet for the gas may be provided separately if the free space is a closed volume or in the alternative consist of an opening, for example, to the ambient atmosphere inside of the melting tank.

In embodiments, an oxygen-free gas, optionally selected from nitrogen, hydrogen, helium, neon, argon, krypton, and mixtures thereof, may be supplied to the inlet. An oxygen-free gas may have an oxygen content of less than 1 % by volume, optionally of less than 0.5 % by volume or of less than 0.1 % by volume or of less than 0.05 % by volume or of less than 0.01 % by volume or of less than 0.001 % by volume or of less than 0.0001 % by volume. These oxygen-free gases protect the electrodes from oxidation and degradation. Common electrodes are, besides carbon and tin oxide, often made of molybdenum, which is heavily oxidized above 500 °C in ambient air. As the temperature of the glass melt typically will reach values of 1,200 °C to 1,600 °C, this temperature can be exceeded also at parts of the electrodes not in direct contact with the melt. Hence, the electrodes generally are cooled in order to avoid this critical temperature. Using oxygen-free gases in a space between the electrodes and the electrode holders may help to prevent oxidation and to reduce the requirement for cooling. This has positive results on the temperature loss of the melt and finally on the carbon footprint of the whole melting process.

In embodiments, the electrode holders may have a glazing collar at a side proximate to the glass melt. A gazing collar is meant to comprise any structure of the electrode holders which will facilitate the formation of a glass seal around the electrode. Examples of such structures are a ring, flange, or crown which optionally are arrangeable or arranged such that a conical space is formed between the electrode and the tip of the electrode holder. These structures facilitate entry of the glass melt into a space between the electrodes and the electrode holders and provide an anchor point for a sufficient reservoir of glass to securely seal the electrode.

In embodiments using this glazing collar, the space between the glazing collar and the electrode may be filled with glass by temporarily decreasing or shutting off a water cooling of the electrodes to let the glass melt flow into that space and, thereafter, reactivating the water cooling. During the deactivation or reduction of the cooling, the temperature of the electrodes and/or the electrode holders may be determined by temperature sensors and used to control the glazing process and prevent an overheating.

In embodiments of the glass melting furnace or the method using the same, the electric current supplied to the electrodes may have a current frequency of at least 300 Hz, of at least 500 Hz, of at least 1,000 Hz, of at least 1,500 Hz, of at least 2,000 Hz, or of at least 2,500 Hz. The electric current supplied to the electrodes may have a current frequency of at most 10,000 Hz, of at most 5,000 Hz, of at most 4,500 Hz, of at most 4,000 Hz, of at most 3,500 Hz, or of at most 3,000 Hz. In particular, the electric current may have a current frequency of less than 3,000 Hz. The electric current supplied to the electrodes may have a current frequency of from 300 Hz to 10,000 Hz or from 500 Hz to 5,000 Hz or from 1,000 Hz to 3,000 Hz.

In a further aspect, the electric conductivity of the glass melt at temperature T2 may be at least 3 S/m. The current glass melting furnace and method are particularly useful for glass compositions which form a melt having a high electric conductivity because the problem of an increased carbon footprint is very pronounced in these types of glass and not yet satisfactorily solved in the state of the art. The electric conductivity may be at least 3 S/m, at least 4 S/m, at least 5 S/m, at least 10 S/m, at least 15 S/m, at least 20 S/m, at least 25 S/m, or at least 30 S/m. The electric conductivity may be at most 45 S/m, at most 44 S/m, at most 43 S/m, at most 42 S/m, at most 41 S/m, at most 40 S/m, at most 38 S/m, or at most 36 S/m. The electric conductivity may be 3 S/m - 45 S/m, 4 S/m - 44 S/m, 5 S/m - 43 S/m, 10 S/m - 42 S/m, 15 S/m - 41 S/m, 20 S/m - 40 S/m, 25 S/m - 38 S/m, or 30 S/m - 36 S/m.

In a further aspect, the glass may comprise a glass composition which contains alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1 % by weight or at least 2 % by weight. Optionally, the amount of alkali metal oxides in the glass composition may be $\geq$ 1 % by weight and < 20 % by weight or $\geq$ 2 % by weight < 10 % by weight.

The glass composition may be a borosilicate, alumino-borosilicate, or aluminosilicate glass.

In a further aspect, the glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight or at least 2 % by weight. Optionally, the amount of alkaline earth metal oxides in the glass composition may be $\geq$ 1 % by weight and < 20 % by weight or $\geq$ 2 % by weight < 10 % by weight.

Optional glass compositions include $Al_2O_3$ in an amount of at least 1.5 % by weight or at least 5.0 % by weight or even at least 10.0 % by weight. The amount of $Al_2O_3$ may be up to 23.0 % by weight, up to 20.0 % by weight or up to 18.0 % by weight. In certain embodiments, the amount of $Al_2O_3$ may range from 1.5 % to 23.0 % by weight, from 5.0 % to 20.0 % by weight or from 10.0 % to 18.0 % by weight.

Additionally or alternatively, the glass composition may include $B_2O_3$ in an amount of at least 0.0 % by weight or at least 8.0 % by weight or even at least 10.0 % by weight. The amount of $B_2O_3$ may be up to 20.0 % by weight, up to 16.0 % by weight or up to 14.0 % by weight. In certain embodiments, the amount of $B_2O_3$ may range from 0.0 % to 20.0 % by weight, from 8.0 % to 16.0 % by weight or from 10.0 % to 14.0 % by weight.

Many highly viscous glass compositions contain significant amounts of $SiO_2$, $Al_2O_3$ and $B_2O_3$. Optionally, the glass compositions used in this disclosure have a total content of $SiO_2$, $Al_2O_3$ and $B_2O_3$ of at least 75.0 % by weight, at least 78.0 % by weight or even at least 85.0 % by weight. The total amount of $SiO_2$, $Al_2O_3$ and $B_2O_3$ may be limited to not more than 97.0 % by weight, up to 93.5 % by weight or up to 90.0 % by weight. Optionally, the amount of $SiO_2$, $Al_2O_3$ and $B_2O_3$ may range from 75.0 % to 95.0 % by weight, from 78.0 % to 92.5 % by weight or from 85.0 % to 90.0 % by weight.

Optionally, glass compositions used in this disclosure may comprise (in % by weight, the composition summing up to 100 %):

| | |
|---|---|
| $SiO_2$ | 71 - 77 |
| $B_2O_3$ | 9 - 12 |
| $Al_2O_3$ | 5.5 - 8 |
| $Na_2O$ | 6-8 |
| $K_2O$ | 0.1 - 0.9 |
| $Li_2O$ | 0-0.3 |
| CaO | 0-1.5 |
| BaO | 0 - 1 |
| F | 0-0.3 |
| Cl- | 0 - 03 |
| MgO+CaO+BaO+SrO | 0-2 |

or

| | |
|---|---|
| $SiO_2$ | 71 - 77 |
| $B_2O_3$ | 9 - 12 |
| $Al_2O_3$ | 3.5-6 |
| $Na_2O$ | 5.5 - 8 |
| $K_2O$ | 0 - 0.5 |
| $Li_2O$ | 0 - 0.3 |
| $CaO$ | 0-3 |
| $BaO$ | 0 - 1.5 |
| $F$ | 0 - 0.3 |
| $Cl-$ | 0-0,3 |
| $MgO+CaO+BaO+SrO$ | 0-2 |

or

| | |
|---|---|
| $SiO_2$ | 60 - 85 |
| $Al_2O_3$ | 0-10 |
| $B_2O_3$ | 5 - 20 |
| $Li_2O + Na_2O + K_2O$ | 2 - 16 |
| $MgO+CaO+SrO+BaO+ZnO$ | 0-15 |

| | |
|---|---|
| $TiO_2 + ZrO_2$ | 0 - 6 |
| $P_2O_5$ | 0 - 2 |

optionally further comprising

coloring oxides, such as $Nd_2O_3$, $Fe_2O_3$, $CoO$, $NiO$, $V_2O_5$, $MnO_2$, $TiO_2$, $CuO$, $CeO_2$, $Cr_2O_3$,

0 - 2 % by weight fining agents, such as $As_2O_3$, $Sb_2O_3$, $SnO_2$, $SO_3$, $Cl$, $F$ and/or $CeO_2$, and

0 - 5 % by weight rare earth metal oxides

In some embodiments, the glass composition can - alternatively or additionally to the compositions described above - be described by the following composition ranges.

In some embodiments, the glass composition can be a borosilicate glass which contains the following components in wt.-%:

| | |
|---|---|
| $SiO_2$ | 70.0 to 87.0 |
| $B_2O_3$ | 7.0 to 25.0 |
| $Na_2O + K_2O$ | 0.5 to 9.0 |
| $Al_2O_3$ | 0.0 to 7.0 |
| $CaO$ | 0.0 to 3.0 |

In some embodiments, the glass composition can be a borosilicate glass which contains the following components in wt.-%:

| | |
|---|---|
| $SiO_2$ | 70.0 to 86.0 |
| $Al_2O_3$ | 0.0 to 8.0, or 0.0 to 5.0 |
| $B_2O_3$ | 9.0 to 25.0 |
| $Na_2O$ | 0.5 to 8.0, or 0.5 to 5.0 |
| $K_2O$ | 0.0 to 1.0 |
| $Li_2O$ | 0.0 to 2.0, or 0.0 to 1.0 |

In some embodiments, the glass composition can be a borosilicate glass which contains the following components in wt.-%:

| | |
|---|---|
| SiO$_2$ | 70.0 to 80.0, or 71.0 to 77.0 |
| Al$_2$O$_3$ | 3.0 to 8.0, or 3.5 to 8.0 |
| B$_2$O$_3$ | 9.0 to 15.0, or 9.0 to 12.0 |
| Na$_2$O | 5.5 to 8.0 |
| K$_2$O | 0.0 to 1.0, or 0.1 to 0.5 |
| Li$_2$O | 0.0 to 0.5, or 0.0 to 0.3 |
| CaO | 0.0 to 3.0, or 0.0 to 1.5 |
| BaO | 0.0 to 1.5 |
| F⁻ | 0.0 to 0.3 |
| Cl⁻ | 0.0 to 0.3 |
| MgO+CaO+BaO+SrO | 0.0 to 2.0 |

In some embodiments, the glass composition can be an alkali borosilicate glass which contains the following components in wt.-%:

| | |
|---|---|
| SiO$_2$ | 78.3 to 81.0 |
| Al$_2$O$_3$ | 3.5 to 5.3 |
| B$_2$O$_3$ | 9.0 to 13.0 |
| Na$_2$O | 3.5 to 6.5 |
| K$_2$O | 0.3 to 2.0 |
| CaO | 0.0 to 2.0 |

In some embodiments, the glass composition can be an alkali borosilicate glass which contains the following components in wt.-%:

| | |
|---|---|
| SiO$_2$ | 55.0 to 85.0 |
| Al$_2$O$_3$ | 0.0 to 15.0 |
| B$_2$O$_3$ | 3.0 to 20.0 |
| Na$_2$O | 3.0 to 15.0 |
| K$_2$O | 3.0 to 15.0 |
| ZnO | 0.0 to 12.0 |
| TiO$_2$ | 0.5 to 10.0 |
| CaO | 0.0 to 0.1 |

In some embodiments, the glass composition can contain the following components in wt.-%:

| | |
|---|---|
| SiO$_2$ | 58.0 to 75.0 |
| Al$_2$O$_3$ | 18.0 to 25.0 |
| Li$_2$O | 3.0 to 6.0 |
| Na$_2$O + K$_2$O | 0.1 to 2.0 |
| MgO+CaO+BaO+ZnO | 1.5 to 6.0 |
| TiO$_2$ + ZrO$_2$ | 2.0 to 6.0 |

and optionally one or more of the oxides from Co, Ni, Fe, Nd, Mo, and optionally one or more refining agents selected from the group of SnO$_2$, chlorides, As$_2$Os, Sb$_2$Os, optionally 0.1 to 1.5 wt.-% SnO$_2$, or optionally 0.1 to 1.5 wt.-% As$_2$O$_5$, or optionally 0.1 to 1.5 wt.-% Sb$_2$O$_5$, or optionally 0.05 to 0.5 wt.-% CeO$_2$ and/or 0.01 to 0.5 wt.-% Cl.
In some embodiments, the glass composition can contain the following components in wt.-%:

| | |
|---|---|
| $SiO_2$ | 58.0 to 65.0 |
| $Al_2O_3$ | 14.0 to 25.0 |
| $B_2O_3$ | 6.0 to 10.5 |
| MgO | 0.0 to 3.0 |
| CaO | 0.0 to 9.0 |
| BaO | 3.0 to 8.0 |
| ZnO | 0.0 to 2.0 |

wherein the sum of MgO, CaO and BaO is from 8.0 to 18.0 wt.-%.

In some embodiments, the glass composition can contain the following components in wt.-%:

| | |
|---|---|
| $SiO_2$ | 50.0 to 68.0, or 55.0 to 68.0 |
| $Al_2O_3$ | 15.0 to 20.0 |
| $B_2O_3$ | 0.0 to 6.0 |
| $Li_2O$ | 0.0 to 6.0 |
| $Na_2O$ | 1.5 to 16.0, or 8.0 to 16.0 |
| $K_2O$ | 0.0 to 5.0 |
| MgO | 0.0 to 5.0 |
| CaO | 0.0 to 7.0, or 0.0 to 1.0 |
| ZnO | 0.0 to 4.0, or 0.0 to 1.0 |
| $ZrO_2$ | 0.0 to 4.0 |
| $TiO_2$ | 0.0 to 1.0, |

or substantially free from $TiO_2$

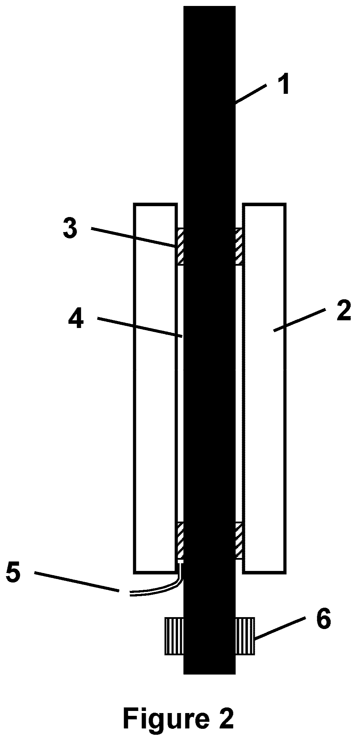

**Figure 2** schematically shows in a cross-cut view an electrode holder (2) with an electrode (1) being held electrically isolated from the electrode holder (2). In the figure, the top side is the side of the electrode (1) which will be immersed into the glass melt. Between the electrode holder (2) and the electrode (1), the isolating members (3) are arranged which hold the electrode (1) concentrically within the electrode holder (2) generating a free space (4). The isolating members (3) may have a ring shape or consist of a multitude of smaller members which do not fully circle the electrode. In particular, if the isolating members (3) have a ring shape, the free space (4) between two of the rings may be provided with an inlet (5) for a purging gas consisting of an oxygen-free gas, such as nitrogen. Otherwise, the inlet (5) may be positioned anywhere along the free space (4). If also an outlet for the purging gas is required, the outlet and the inlet (5) may be positioned on distal ends of the free space (4) to ensure that the gas may optimally purge it. Likewise, the inlet (5) may be positioned distal to an opening to the ambient atmosphere for ensuring that the whole length of the electrode (1) is purged. At the lower end (in the figure) of the electrode (1), there is arranged the power connector (6) which will supply the current to the electrode (1).

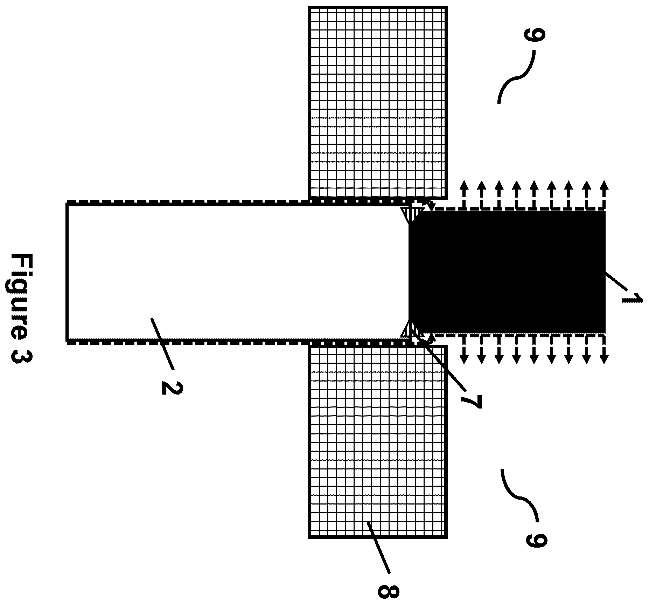

**Figure 3** schematically shows in a cross-cut view an electrode holder (2) with an electrode (1) which is conductively connected to the electrode holder (2) by means of a short circuit ring (7). The short circuit ring (7) which is positioned at the tip of the electrode holder (2) conductively clamps the electrode (1) to the electrode holder (2). The electrode holder (2) is arranged in the figure in a passage through the refractory material (8) of a wall or a bottom plate of a melting tank. The electrode (1) extends into the glass melt (9). The path of the current is schematically indicated in the figure by the dashed arrows. As the current is of a frequency of at least 300 Hz, the current-displacement effect causes the current to flow essentially on the outside surface of the electrode holder (2) and the electrode (1).

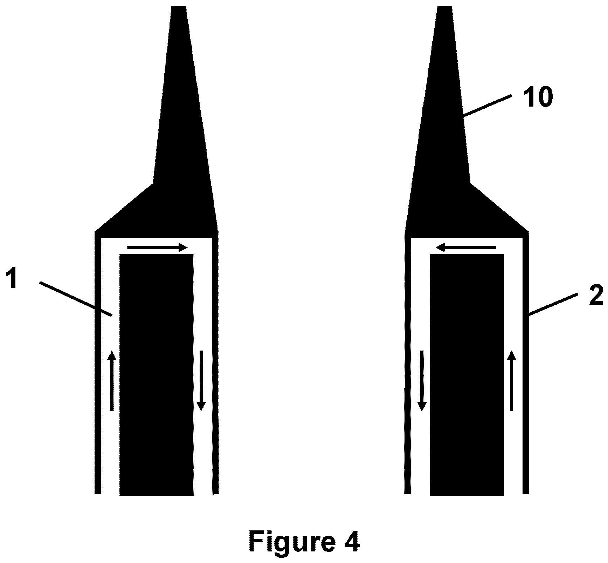

**Figure 4** shows a partial cross-sectional view of an electrode holder (2) with a glazing collar (10). It is the side of the electrode holder (2) where the electrode will exit the electrode holder (2) and extend into the glass melt. The tip of the electrode holder (2) is provided with a glazing collar (10) shaped as ring with an inner surface which is slanted towards the outside of the electrode holder (2). The electrode holder (2) has a cooling water duct (11) in which water is circulated underneath its outer surface, the tip, and the inner surface. The glazing collar (10) abuts on the cooled tip and is, hence, also cooled. If an electrode is placed inside the electrode holder (2), the resulting space between the glazing collar (10) at the tip of the electrode holder (2) and the electrode will have the frustoconical shape of a triangular toroid. As can be seen in the figure, the slanted ring of the glazing collar (10) looks like a funnel and can also have a similar effect on the glass melt. It facilitates entry of the glass melt into the free space between the outer surface of the electrode and the inner surface of the electrode holder (2) if the cooling in the cooling water duct (11) is reduced or stopped and the temperature of the tip has sufficiently increased. Once the cooling is reengaged, a glass seal will form from the solidifying glass melt and seal the electrode holder (2) and the electrode against the ambient atmosphere.

Reference numerals

| 1 | electrode |
|---|---|
| 2 | electrode holder |
| 3 | isolating member |
| 4 | free space |
| 5 | inlet |
| 6 | power connector |
| 7 | short circuit ring |
| 8 | refractory material |
| 9 | glass melt |
| 10 | glazing collar |
| 11 | cooling water duct |

## Claims

1. Glass melting furnace comprising a vessel for containing a glass melt (9), at least two electrode holders (2) each holding an electrode (1), and a power source connected to the electrodes (1), wherein

   - the power source is configured to provide an electric current having a current frequency of $\geq 300$ Hz, and
   - the electrode holders (2) are at least partially made of a material having a relative magnetic permeability $\mu_r \leq 100$.

2. Glass melting furnace according to claim 1, wherein the material of the electrode holders (2) has a relative magnetic permeability $\mu_r \leq 10$ or a relative magnetic permeability of $0.95 \leq \mu_r \leq 1.05$.

3. Glass melting furnace according to claim 1 or 2, wherein the electrode holders (2) are mounted electrically isolated and/or with a material having a relative magnetic permeability $\mu_r \leq 100$ or a relative magnetic permeability $\mu_r \leq 10$ or a relative magnetic permeability of $0.95 \leq \mu_r \leq 1.05$.

4. Glass melting furnace according to any one of the preceding claims, wherein the electrodes (1) are electrically isolated from the electrode holders (2) or are conductively connected to the electrode holders (2), optionally with a short circuit ring (7).

5. Glass melting furnace according to any one of the preceding claims, wherein, when held by the electrode holders (2), between the electrodes (1) and the electrode holders (2) a free space (4) is formed which is in fluid communication with an inlet (5) for a gas.

6. Glass melting furnace according to any one of the preceding claims, wherein the electrode holders (2) have a glazing collar (10) at a side proximate to the glass melt (9).

7. Method for electrically heating a glass melt (9) in a glass melting furnace comprising at least two electrode holders (2) each holding an electrode (1) by supplying an electric current to the electrodes (1), wherein

   - the electric current has a current frequency of $\geq 300$ Hz, and
   - the electrode holders (2) are at least partially made of a material having a relative magnetic permeability $\mu_r \leq 100$.

8. Method according to claim 7, wherein the material of the electrode holders (2) has a relative magnetic permeability $\mu_r \leq 10$ or a relative magnetic permeability of $0.95 \leq \mu_r \leq 1.05$.

9. Method according to claim 7 or 8, wherein the electric current has a current frequency of from 300 Hz to 10,000 Hz or from 500 Hz to 5,000 Hz or from 1,000 Hz to 3,000 Hz.

10. Method according to any one of claims 7 to 9, wherein, when held by the electrode holders (2), between the electrodes (1) and the electrode holders (2) a free space (4) is formed, which is in fluid communication with an inlet (5) for a gas,

and an oxygen-free gas, optionally selected from nitrogen, hydrogen, helium, neon, argon, krypton, and combinations thereof is supplied to the inlet (5).

11. Method according to any one of claims 7 to 10, wherein the electrode holders (2) have a glazing collar (10) at a side proximate to the glass melt (9) and a space between the glazing collar (10) and the electrode (1) is filled with glass by temporarily decreasing or shutting off a water cooling of the electrodes to let the glass melt (9) flow into that space and, thereafter, reactivating the water cooling.

**Patentansprüche**

1. Glasschmelzofen, aufweisend einen Behälter zum Aufnehmen einer Glasschmelze (9), mindestens zwei Elektrodenhalter (2), die jeweils eine Elektrode (1) halten, und eine mit den Elektroden (1) verbundene Stromquelle, wobei

   die Stromquelle dafür konfiguriert ist, einen elektrischen Strom mit einer Stromfrequenz von $\geq 300$ Hz bereitzustellen, und
   die Elektrodenhalter (2) zumindest teilweise aus einem Material mit einer relativen magnetischen Permeabilität von $\mu_r \leq 100$ hergestellt sind.

2. Glasschmelzofen nach Anspruch 1, wobei das Material der Elektrodenhalter (2) eine relative magnetische Permeabilität von $\mu_r \leq 10$ oder eine relative magnetische Permeabilität von $0{,}95 \leq \mu_r \leq 1{,}05$ aufweist.

3. Glasschmelzofen nach Anspruch 1 oder 2, wobei die Elektrodenhalter (2) elektrisch isoliert und/oder mit einem Material mit einer relativen magnetischen Permeabilität von $\mu_r \leq 100$ oder einer relativen magnetischen Permeabilität von $\mu_r \leq 10$ oder einer relativen magnetischen Permeabilität von $0{,}95 \leq \mu_r \leq 1{,}05$ montiert sind.

4. Glasschmelzofen nach einem der vorhergehenden Ansprüche, wobei die Elektroden (1) elektrisch isoliert von den Elektrodenhaltern (2) sind oder leitend mit den Elektrodenhaltern (2) verbunden sind, optional mit einem Kurzschlussring (7).

5. Glasschmelzofen nach einem der vorhergehenden Ansprüche, wobei, wenn die Elektroden (1) durch die Elektrodenhalter (2) gehalten werden, zwischen den Elektroden (1) und den Elektrodenhaltern (2) ein Freiraum (4) gebildet wird, der in Fluidkommunikation mit einem Einlass (5) für ein Gas steht.

6. Glasschmelzofen nach einem der vorhergehenden Ansprüche, wobei die Elektrodenhalter (2) an einer Seite in der Nähe der Glasschmelze (9) einen Verglasungskragen (10) aufweisen.

7. Verfahren zum elektrischen Erwärmen einer Glasschmelze (9) in einem Glasschmelzofen, der mindestens zwei Elektrodenhalter (2) aufweist, die jeweils eine Elektrode (1) halten, durch Zuführen von elektrischem Strom zu den Elektroden (1), wobei

   der elektrische Strom eine Stromfrequenz von $\geq 300$ Hz hat, und
   die Elektrodenhalter (2) mindestens teilweise aus einem Material mit einer relativen magnetischen Permeabilität von $\mu_r \leq 100$ bestehen.

8. Verfahren nach Anspruch 7, wobei das Material der Elektrodenhalter (2) eine relative magnetische Permeabilität von $\mu_r \leq 10$ oder eine relative magnetische Permeabilität von $0{,}95 \leq \mu_r \leq 1{,}05$ aufweist.

9. Verfahren nach Anspruch 7 oder 8, wobei der elektrische Strom eine Stromfrequenz von 300 Hz bis 10000 Hz oder von 500 Hz bis 5000 Hz oder von 1000 Hz bis 3000 Hz aufweist.

10. Verfahren nach einem der Ansprüche 7 bis 9, wobei,

    wenn die Elektroden (1) durch die Elektrodenhalter (2) gehalten werden, zwischen den Elektroden (1) und den Elektrodenhaltern (2) ein Freiraum (4) gebildet wird, der in Fluidkommunikation mit einem Einlass (5) für ein Gas steht, und
    dem Einlass (5) ein sauerstofffreies Gas, das optional aus Stickstoff, Wasserstoff, Helium, Neon, Argon, Krypton und Kombinationen davon ausgewählt ist, zugeführt wird.

**11.** Verfahren nach einem der Ansprüche 7 bis 10, wobei die Elektrodenhalter (2) an einer Seite in der Nähe der Glasschmelze (9) einen Verglasungskragen (10) aufweisen und ein Raum zwischen dem Verglasungskragen (10) und der Elektrode (1) mit Glas gefüllt wird, indem eine Wasserkühlung der Elektroden vorübergehend vermindert oder abgeschaltet wird, um zu veranlassen, dass die Glasschmelze (9) in diesen Raum fließt, und danach die Wasserkühlung wieder aktiviert wird.

**Revendications**

**1.** Four de fusion de verre comprenant un récipient destiné à contenir du verre en fusion (9), au moins deux supports d'électrodes (2) tenant chacun une électrode (1), et une source d'alimentation connectée aux électrodes (1), dans lequel :

- la source d'alimentation est configurée pour fournir un courant électrique ayant une fréquence de courant $\geq 300$ Hz, et
- les porte-électrodes (2) sont au moins partiellement constitués d'un matériau ayant une perméabilité magnétique relative $\mu_r \leq 100$.

**2.** Four de fusion de verre selon la revendication 1, dans lequel le matériau des porte-électrodes (2) a une perméabilité magnétique relative $\mu_r \leq 10$ ou une perméabilité magnétique relative de $0{,}95 \leq \mu_r \leq 1{,}05$.

**3.** Four de fusion du verre selon la revendication 1 ou 2, dans lequel les porte-électrodes (2) sont montés de manière isolée électriquement et/ou avec un matériau ayant une perméabilité magnétique relative $\mu_r \leq 100$ ou une perméabilité magnétique relative $\mu_r \leq 10$ ou une perméabilité magnétique relative de $0{,}95 \leq \mu_r \leq 1{,}05$.

**4.** Four de fusion de verre selon l'une quelconque des revendications précédentes, dans lequel les électrodes (1) sont isolées électriquement des porte-électrodes (2) ou sont reliées de manière conductrice aux porte-électrodes (2), éventuellement avec une bague de court-circuit (7).

**5.** Four de fusion de verre selon l'une quelconque des revendications précédentes, dans lequel, lorsqu'elles sont maintenues par les porte-électrodes (2), un espace libre (4) est formé entre les électrodes (1) et les porte-électrodes (2), lequel espace est en communication fluidique avec une entrée (5) pour un gaz.

**6.** Four de fusion de verre selon l'une quelconque des revendications précédentes, dans lequel les porte-électrodes (2) comportent un collier de vitrage (10) sur un côté proximal du verre en fusion (9).

**7.** Procédé pour chauffer électriquement un verre fondu (9) dans un four de fusion de verre comprenant au moins deux porte-électrodes (2) tenant chacun une électrode (1) en fournissant un courant électrique aux électrodes (1), dans lequel

- le courant électrique a une fréquence $\geq 300$ Hz, et
- les porte-électrodes (2) sont au moins partiellement réalisés d'un matériau ayant une perméabilité magnétique relative $\mu_r \leq 100$.

**8.** Procédé selon la revendication 7, dans lequel le matériau des porte-électrodes (2) a une perméabilité magnétique relative $\mu_r \leq 10$ ou une perméabilité magnétique relative de $0{,}95 \leq \mu_r \leq 1{,}05$.

**9.** Procédé selon la revendication 7 ou 8, dans lequel le courant électrique a une fréquence de courant comprise entre 300 Hz et 10 000 Hz ou entre 500 Hz et 5 000 Hz ou entre 1 000 Hz et 3 000 Hz.

**10.** Procédé selon l'une quelconque des revendications 7 à 9, dans lequel, lorsqu'elles sont maintenues par les porte-électrodes (2), un espace libre (4) est formé entre les électrodes (1) et les porte-électrodes (2), lequel espace libre est en communication fluidique avec une entrée (5) pour un gaz, et un gaz exempt d'oxygène, choisi éventuellement parmi l'azote, l'hydrogène, l'hélium, le néon, l'argon, le krypton et leurs combinaisons, est fourni à l'entrée (5) .

**11.** Procédé selon l'une quelconque des revendications 7 à 10, dans lequel les porte-électrodes (2) comportent un collier de vitrage (10) sur un côté proximal du verre en fusion (9) et un espace entre le collier de vitrage (10) et l'électrode (1) est rempli de verre en diminuant temporairement ou en coupant un refroidissement par eau des électrodes afin de laisser le verre en fusion (9) s'écouler dans cet espace, puis ensuite, en réactivant le refroidissement par eau.

**Figure 1a**

## Figure 1b

## Figure 1c

**Figure 2**

**Figure 3**

**Figure 4**

**EP 4 574 777 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4342856 A1
- US 2006144089 A1
- US 2017305775 A1
- CN 208545291 U